# EUROPEAN PATENT SPECIFICATION

(11) **EP 3 360 009 B1**
(45) Date of publication and mention of the grant of the patent: **26.08.2020**
(21) Application number: 16854401.3
(22) Date of filing: 07.10.2016
(51) Int. Cl.: G02F 1/157, B32B 17/06, G02B 5/28

(54) **WINDOW ASSEMBLY WITH INFRARED REFLECTOR**
FENSTERANORDNUNG MIT INFRAROTREFLEKTOR
ENSEMBLE FENÊTRE AVEC RÉFLECTEUR À INFRAROUGE

(30) Priority: 08.10.2015 US 201562238982 P; 22.06.2016 US 201662353383 P
(43) Date of publication of application: 15.08.2018
(73) Proprietor: Gentex Corporation, Zeeland, MI 49464 (US)
(72) Inventor: LUTEN, Henry A., Zeeland, Michigan 49464 (US); DRISCOLL, David I., Zeeland, Michigan 49464 (US); ASH, Kevin L., Zeeland, Michigan 49464 (US); STEPHENSON, Michael T., Zeeland, Michigan 49464 (US); CAMMENGA, David J., Zeeland, Michigan 49464 (US)
(74) Representative: Müller-Boré & Partner Patentanwälte PartG mbB
(86) International application number: PCT/US2016/055941
(87) International publication number: WO 2017/062738

(56) References cited:
- WO-A1-2009/004385
- WO-A1-2012/154663
- WO-A1-2014/029536
- WO-A1-2014/082092
- US-A1- 2006 222 863
- US-A1- 2012 033 287
- US-B2- 6 783 099
- US-B2- 8 658 283

## Description

### FIELD OF THE DISCLOSURE

The present disclosure generally relates to a window assembly, and more particularly, to a window assembly having an infrared reflector.

### BACKGROUND

Electro-optic assemblies are being used in various vehicular and building applications. Use of these assemblies, in various applications, can be limited by cost, as well as aesthetic and functional considerations. Heating of the electro-optic assemblies by incident infrared radiation may be a problem for certain installations or uses. Accordingly, new electro-optic assembly designs, configurations and assemblies, along with methods of making them, are needed, particularly in view of reducing material and processing costs, improving aesthetics and/or enhancing functionality.

WO 2014/029536 A1 discloses a composite panel with electrically switchable optical properties, wherein the composite panel comprises an outer panel and an inner panel which are connected to one another over the entire length thereof via an interlayer. Within the interlayer, the composite panel comprises a switchable functional element with at least one active layer. Further, the composite panel comprises an infrared protective coating arranged between the outer panel and the active layer over the entire length thereof, wherein the infrared protective coating contains at least three functional layers with reflecting properties for the infrared range.

WO 2012/154663 A1 discloses a window glazing suitable for use in automotive applications wherein a switchable film is protected from UV exposure and over-temperature exposure by a coating that reflects IR and UV light in combination with an interlayer that absorbs UV light.

WO 2009/004385 A1 discloses a glazing comprising a switchable film laminated between at least two plies of an interlayer material. The plies of interlayer material are laminated between a first ply of glass facing out of the vehicle and a second ply of glass facing into the vehicle. The switchable film comprises first and second electrodes, both in electrical connection with a power supply. The first electrode is capacitively connected to electrical ground on the vehicle body.

US2012/0033287 discloses a window assembly with at least two transparent substrates, each being provided with respective electrochromic device thereon; sealing separator provided between two substrates and interior region contains an inert gas.

### SUMMARY OF THE DISCLOSURE

The present invention is defined by the features of claim 1. Preferred embodiments are defined by the dependent claims.

According to an example suitable for understanding the present disclosure, a window assembly is provided that includes an electro-optic element with a first substantially transparent substrate defining first and second surfaces and a second substantially transparent substrate spaced apart from the first substrate. The second substrate defines third and fourth surfaces. The first and second substrates define a cavity therebetween. An electro-optic medium is disposed in the cavity, the electro-optic medium being variably transmissive such that the electro-optic element is operable between substantially clear and darkened states. A reflective film includes a stack of alternating materials. The reflective film is configured as an infrared light reflector.

According to another example suitable for understanding the present disclosure, a window assembly is provided that includes an electro-optic element with a first substantially transparent substrate defining first and second surfaces. At least one of the first and second surfaces includes a first electrically conductive layer and a second substantially transparent substrate spaced apart from the first substrate to define a cavity therebetween. The second substrate defines third and fourth surfaces, wherein at least one of the third and fourth surfaces includes a second electrically conductive layer. An electrochromic medium is disposed in the cavity. The electrochromic medium is variably transmissive such that the electro-optic element is operable between substantially clear and substantially darkened states. A pane is positioned proximate the electro-optic element and a reflective film is positioned on the pane. The reflective film includes alternating layers of dielectric material.

These and other aspects, objects, and features of the present disclosure will be understood and appreciated by those skilled in the art upon studying the following specification, claims, and appended drawings.

### BRIEF DESCRIPTION OF THE DRAWINGS

In the drawings:
FIG. 1A is a front plan view of a window assembly, according to one example of the disclosure;
FIG. 1B is a perspective view of a vehicle window assembly, according to one example;
FIG. 2A is a cross-sectional view of the window assembly of FIG. 1A taken at line 2A, according to one example;
FIG. 2B is a cross-sectional view of the window assembly of FIG. 1A taken at line 2B, according to one example
FIG. 2C is an enlarged cross-sectional view of one example of an infrared film as used in the present disclosure;
FIG. 2D is an enlarged cross-sectional view of one example of an infrared film used in the present disclosure;
FIG. 3 is a graph of reflectance versus wavelength of several exemplary filters, according to various examples;
FIG. 4A is a graph of the transmission of solar radiation by an electrochromic window in a clear state with several exemplary filters, according to various examples;
FIG. 4B is a graph of the transmission of solar radiation by an electrochromic window in a darkened state with several exemplary filters, according to various examples;
FIG. 5A is a graph of the absorption of solar radiation by an electrochromic window in a clear state with several exemplary filters, according to various examples;
FIG. 5B is a graph of the absorption of solar radiation by an electrochromic window in a darkened state with several exemplary filters, according to various examples;
FIG. 6A is a graph of an extra-terrestrial irradiance spectrum standard ASTM-E490;
FIG. 6B is a graph of the transmittance of an electrochromic window in a clear state and a dark state with no filters, according to one example;
FIG. 6C is a graph of the transmitted solar energy of an electrochromic window in a clear state and a dark state with no filters, according to one example;
FIG. 6D is a graph of the absorbance of an electrochromic window in a clear state and a dark state with no filters, according to one example;
FIG. 6E is a graph of the absorbed solar energy of an electrochromic window in a clear state and a dark state with no filters, according to one example;
FIG. 7 is a cross-sectional view of a window assembly according to the invention; and
FIG. 8 is a cross-sectional view of a window assembly according to another embodiment of the invention.

### DETAILED DESCRIPTION

The present illustrated examples reside primarily in combinations of method steps and apparatus components related to a window assembly. Accordingly, the apparatus components and method steps have been represented, where appropriate, by conventional symbols in the drawings, showing only those specific details that are pertinent to understanding the examples of the present disclosure so as not to obscure the disclosure with details that will be readily apparent to those of ordinary skill in the art having the benefit of the description herein. Further, like numerals in the description and drawings represent like elements.

In this document, relational terms, such as first and second, top and bottom, and the like, are used solely to distinguish one entity or action from another entity or action, without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises ... a" does not, without more constraints, preclude the existence of additional identical elements in the process, method, article, or apparatus that comprises the element.

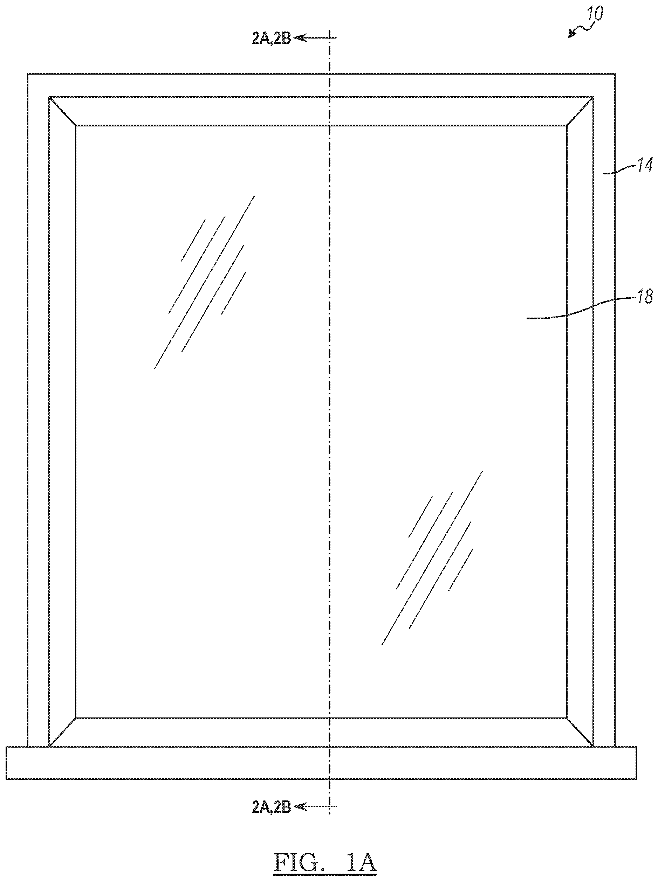

Referring to FIGS. 1A-5B, 7 and 8, a window assembly 10 includes a frame 14 and an electro-optic element 18. The electro-optic element 18 includes a first substantially transparent substrate 22 having a first surface 26 and a second surface 30 disposed on opposite sides thereof. The second surface 30 includes a first electrically conductive layer 34. A second substantially transparent substrate 38 has a third surface 42 and a fourth surface 46 disposed on opposite sides thereof. The third surface 42 includes a second electrically conductive layer 50. A primary seal 54 is disposed between the first and second substrates 22, 38. The seal 54 and the first and second substrates 22, 38 cooperate to define a cavity 58 therebetween. An electro-optic medium 62 is disposed in the cavity 58. The electro-optic medium 62 is variably transmissive such that the electro-optic element 18 is operable between substantially clear and darkened states. An infrared reflective film 66 is positioned on at least any one of the first surface 26, second surface 30, third surface 42 and the fourth surface 46.

Referring to FIG. 1A, the window assembly 10 incorporates the electro-optic element 18 within the frame 14. The window assembly 10 may be employed in vehicles (e.g., trains, planes, automobiles, buses, boats) and buildings (e.g., houses, skyscrapers, strip malls). The window assembly 10 is operable between a transparent window state in which the window assembly 10 is substantially transparent to visible light, and a darkened state in which a portion, or no visible light (e.g., the window assembly 10 becomes essentially opaque), is transmitted through the window assembly 10. The transparent and darkened states of the window assembly 10 are carried out by changing the transmission states of the electro-optic element 18 between a substantially clear state and a substantially dark or darkened state, as well as intermediate states thereto. The darkened state of the electro-optic element 18 is defined relative to the transmissivity of the substantially clear state. Typical transmissivity of the electro-optic element 18 in the substantially clear state may be greater than about 50%, greater than about 55%, and greater than about 60%. The percentage of reflectance, transmittance and absorption of the electro-optic element 18 sum to 100%. Typical transmissivity of the electro-optic element 18 in the substantially darkened state may be less than about 1%, less than about 0.1%, less than about 0.01%, or less than about 0.001%. The electro-optic element 18 may be essentially opaque to wavelengths of light longer than 1300 nm (e.g., due to the first and second electrically conductive layers 34, 50), but leak light having a wavelength of between about 750 nm and about 1300 nm. Further, the electro-optic element 18 may also be essentially opaque to wavelengths of light longer than 5000 nm (e.g., due to the first and second substrates 22, 38). The leaked light may be perceived as heat on exposed skin of a viewer. The frame 14 may operate to conceal edges of the electro-optic element 18. The frame 14 may also house and/or conceal electronics and mounting hardware used in the operation of the window assembly 10. When the window assembly 10 is in the transparent window state with the electro-optic element 18 in the substantially clear state, a viewer is able to look through the window assembly 10 to observe objects behind the window assembly 10.

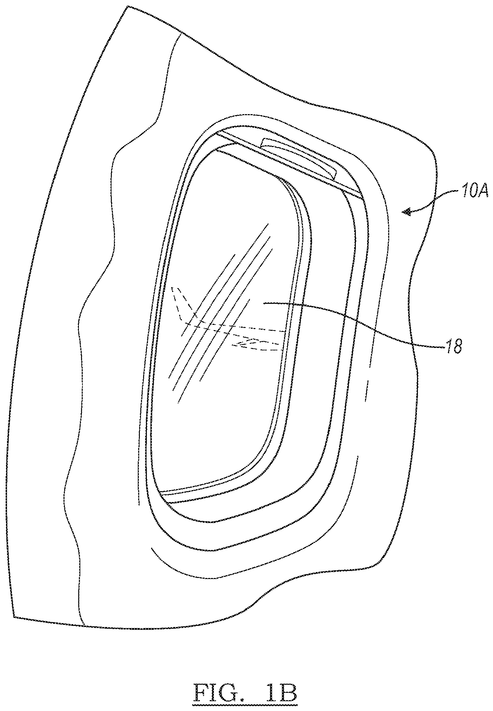

Referring now to FIG. 1B, the electro-optic element 18 may be used in a vehicle window assembly 10A. The vehicle window assembly 10A may be used in an airplane, automobile, bus, train, etc. It will be understood that this disclosure, although described in connection with the window assembly 10, may also be used with the vehicle window assembly 10A.

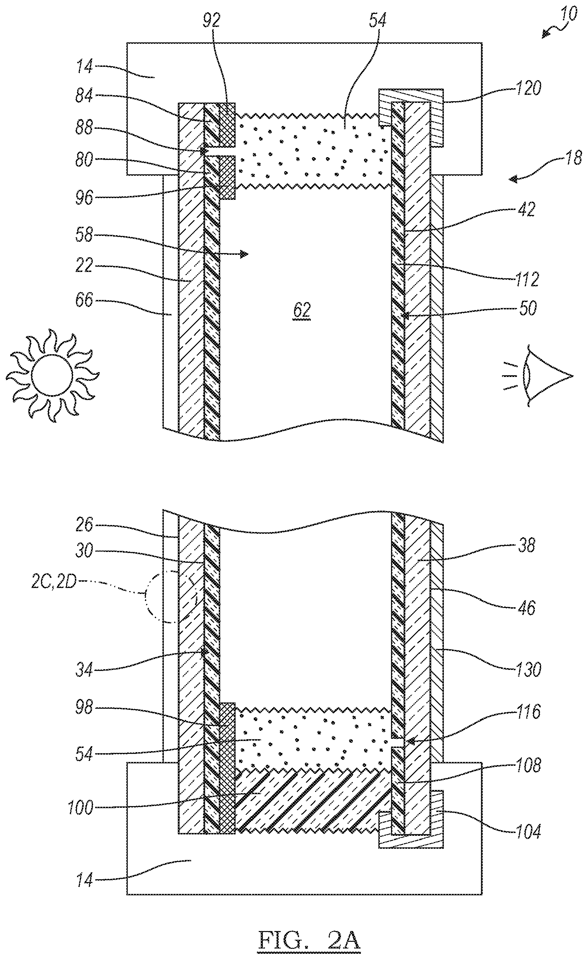

FIG. 2A generally depicts an enlarged cross-sectional view of the window assembly 10 of FIG. 1A revealing greater detail. In the example of FIG. 2A, the electro-optic element 18 includes the first substrate 22 having the front or first surface 26 and the second surface 30. The first surface 26 is a viewer side, as indicated by an eye symbol, and is the inward, or viewer facing side, of the window assembly 10. A first conductive electrode portion 80 and a second conductive electrode portion 84 applied to the second surface 30 cooperate to define the first electrically conductive layer 34. The first and second conductive electrode portions 80, 84 are substantially electrically insulated from one another via a first isolation area 88. The first isolation area 88 cooperates with a portion of the primary seal 54 to define the second conductive electrode portion 84 and a second spectral filter portion 92, each substantially electrically insulated from the first conductive electrode portion 80 and a first spectral filter portion 96. This configuration allows for placement of an electrically conductive material 100 (e.g., a first conductive epoxy) adjacent to the primary seal 54. A first electrical clip 104 is in contact with the electrically conductive material 100 and is further in electrical communication with a third conductive electrode portion 108 and the electro-optic medium 62 disposed within the cavity 58. Electrical energy is passed through the first electrical clip 104, through the electrically conductive material 100 and across a third spectral filter portion 98 into the first electrically conductive layer 34.

Referring again to FIG. 2A, the fourth surface 46 of the second substrate 38 is a sunlit side, as indicated by a sun symbol, and is the outward side on which sunlight falls on the window assembly 10. It will be understood that the window assembly 10 may be reoriented such that a viewer looks through the fourth surface 46 and the first surface 26 may be the sunlit side without departing from the scope of the claims. In addition, it should be noted that the first substrate 22 may be larger than the second substrate 38 to create an offset along at least a portion of the perimeter of the window assembly 10. The third conductive electrode portion 108 and a fourth conductive electrode portion 112 are shown proximate the third surface 42 and are electrically insulated via a second isolation area 116. The third and fourth conductive electrode portions 108, 112 cooperate to define the second electrically conductive layer 50. The second isolation area 116 cooperates with a portion of the primary seal 54 to define the fourth conductive electrode portion 112 that is substantially electrically insulated from the third conductive electrode portion 108. A second electrical clip 120 is in electrical communication with the fourth conductive electrode portion 112 and the electro-optic medium 62. In various examples, the second electrically conductive layer 50 may include a metal reflector or one or more coatings configured as any of the partially reflective, partially transmissive ("transflective") coatings disclosed in U.S. Patent No. 6,700,692. Inclusion of a metal reflector or a transflective coating may render the electro-optic element 18 at least partially reflective.

Still referring to FIG. 2A, the primary seal 54 traverses an approximate perimeter of and is configured to cooperate with the first and second substrates 22, 38 to define the cavity 58 as substantially hermetic. The primary seal 54 may be applied to the first or second substrates 22, 38 by methods commonly used in the liquid crystal display (LCD) industry, such as by silk-screening or dispensing. The electro-optic medium 62 is disposed within the cavity 58, as shown in FIG. 2A. The first and third spectral filter portions 96, 98 extend inboard from the primary seal 54 into the cavity 58 sufficiently far enough to generally conceal the primary seal 54 from a viewer.

According to at least one example, the electro-optic medium 62 is an electrochromic medium which includes at least one solvent, at least one anodic material, and at least one cathodic material. Typically, both of the anodic and cathodic materials are electroactive and at least one of them is electrochromic. It will be understood that regardless of its ordinary meaning, the term "electroactive" may mean a material that undergoes a modification in its oxidation state upon exposure to a particular electrical potential difference. Additionally, it will be understood that the term "electrochromic" will be defined herein, regardless of its ordinary meaning, as a material that exhibits a change in its extinction coefficient at one or more wavelengths upon exposure to a particular electrical potential difference. Electrochromic components, as described herein, include materials whose color or opacity are affected by electric current, such that when an electrical field is applied to the material, the color or opacity change from a first phase to a second phase. The electrochromic component may be a single-layer, single-phase component, multi-layer component, or multi-phase component, as described in U.S. Patent Nos. 5,928,572 entitled "Electrochromic Layer And Devices Comprising Same," 5,998,617 entitled "Electrochromic Compounds," 6,020,987 entitled "Electrochromic Medium Capable Of Producing A Pre-selected Color," 6,037,471 entitled "Electrochromic Compounds," 6,141,137 entitled "Electrochromic Media For Producing A Pre-selected Color," 6,241,916 entitled "Electrochromic System," 6,193,912 entitled "Near Infrared-Absorbing Electrochromic Compounds And Devices Comprising Same," 6,249,369 entitled "Coupled Electrochromic Compounds With Photostable Dication Oxidation States," 6,137,620 entitled "Electrochromic Media With Concentration Enhanced Stability, Process For The Preparation Thereof and Use In Electrochromic Devices;" U.S. Patent No. 6,519,072 entitled "Electrochromic Device;" and International Patent Application Serial Nos. PCT/US98/05570 entitled "Electrochromic Polymeric Solid Films, Manufacturing Electrochromic Devices Using Such Solid Films, And Processes For Making Such Solid Films And Devices," PCT/EP98/03862 entitled "Electrochromic Polymer System," and PCT/US98/05570 entitled "Electrochromic Polymeric Solid Films, Manufacturing Electrochromic Devices Using Such Solid Films, And Processes For Making Such Solid Films And Devices,".

With further reference to FIG. 2A, a low emissivity coating 130 may be disposed on the first surface 26. It will be understood that in examples where the fourth surface 46 is the viewing side, the low emissivity coating 130 may be disposed on the fourth surface 46 without departing from the scope of the claims. Further, it will also be understood that the reflective film 66 and/or the low emissivity coating 130 may be added to adjacent panes of the window assembly 10 or vehicle window assembly 10A if the electro-optic element 18 is part of a multi-pane window system (e.g., an insulated glass unit or aircraft window assembly). The low emissivity coating 130 may be applied via pyrolytic chemical vapor deposition, via magnetron sputtering and/or other methods of depositing thin film coatings. In chemical vapor deposition techniques, the low emissivity coating 130 may be a fluorinated tin oxide. In magnetron sputtering techniques, the low emissivity coating 130 may include a reflective metal (e.g., silver, copper, gold, chromium, nickel, aluminum, titanium or combinations thereof) and have a layer thickness of between about 1 nm and about 50 nm. In some examples, an antireflective metal oxide layer may be present in the low emissivity coating 130 on top of the chemical vapor deposition or sputtering layer. The low emissivity coating 130 may have an emissivity of less than about 0.5, less than about 0.4, less than about 0.3, less than about 0.2, less than about 0.1, less than about 0.05, less than about 0.04, less than about 0.03, less than about 0.02, or less than about 0.01. Heat may be generated within the window assembly 10 or electro-optic element 18 by exposure to solar radiation; more so in the darkened state than the clear state. A blackbody at 100° C has a maximum spectral irradiance at a wavelength of 7.8 µm. Most common glasses and plastics are opaque at this wavelength, meaning they have a high emissivity and will radiate infrared energy to cool. Accordingly, the electro-optic element 18 may radiate infrared energy to cool itself. Application of the low emissivity coating 130 to the first surface 26 may force radiative emission to take place primarily from the sun-lit side (e.g., the fourth surface 46). Accordingly, use of the low emissivity coating 130 may be advantageous in that it may block the emission or transmission of infrared radiation originating from within the window assembly 10 or the sunlit side of the window assembly 10 from entering the vehicle or structure to which the window assembly 10 is coupled.

Still referring to FIG. 2A, disposed on sunlit or fourth surface 46 of the second substrate 38 is the infrared reflective film 66. It will be understood that in examples where the first surface 26 is the sunlit side, the reflective film 66 may be disposed on the first surface 26 without departing from the scope of the claims. The reflective film 66 may be configured to reflect a particular band of electromagnetic radiation (e.g., ultraviolet light, visible light, and/or infrared light) or more than one band of electromagnetic radiation. In a specific example, the reflective film 66 may be configured to reflect near-infrared light (e.g., about 750 nm to about 1400 nm). The reflective film 66 may include layers of dielectrics, layers of metal, or both metal layers and dielectric layers. Exemplary examples of the reflective film 66 may include a stack of alternating dielectric layers, a split reflector configuration or a triple reflector configuration. In various examples, the reflective film 66 is highly transparent to visible light such that visibility through the window assembly 10 is not degraded. Infrared reflecting film 66 is advantageous in that it would prevent the window assembly 10 from absorbing or transmitting infrared radiation. This may be desirable as the infrared radiation transmitted through the window assembly 10, or absorbed then emitted by the window assembly 10, may be experienced on the viewer side of the window assembly 10 as heat, which may be uncomfortable or increase a heat load of a vehicle or structure to which the window assembly 10 is attached. It will be understood that the reflective film 66 may be configured as a coating, film, additional substrate, veneer, glaze, layer and/or covering without departing from the scope of the claims.

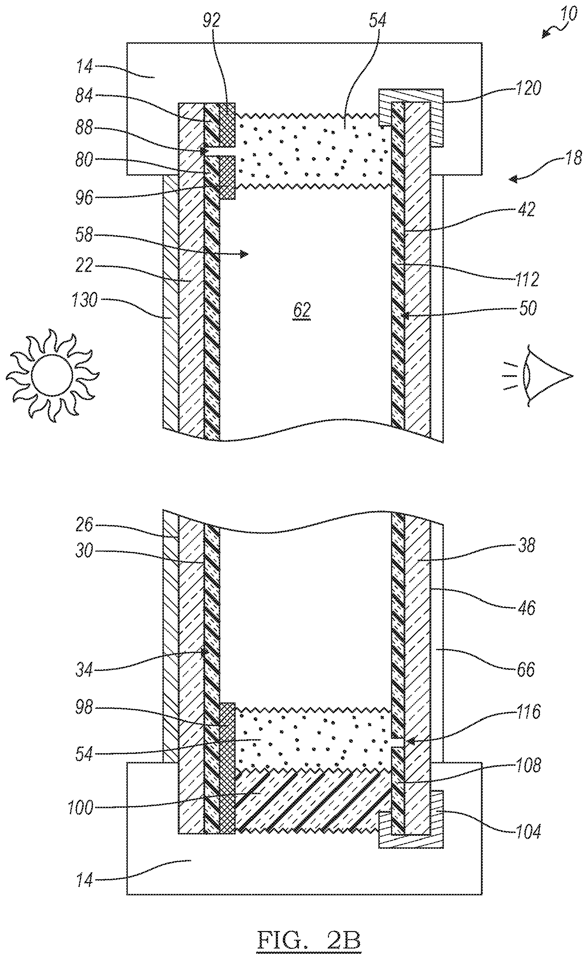

Referring now to the depicted example of FIG. 2B, the reflective film 66 may be positioned on the first surface 26, or the viewer side of the window assembly 10, and the low emissivity coating 130 may be positioned on the fourth surface 46, or the sunlit side of the window assembly 10.

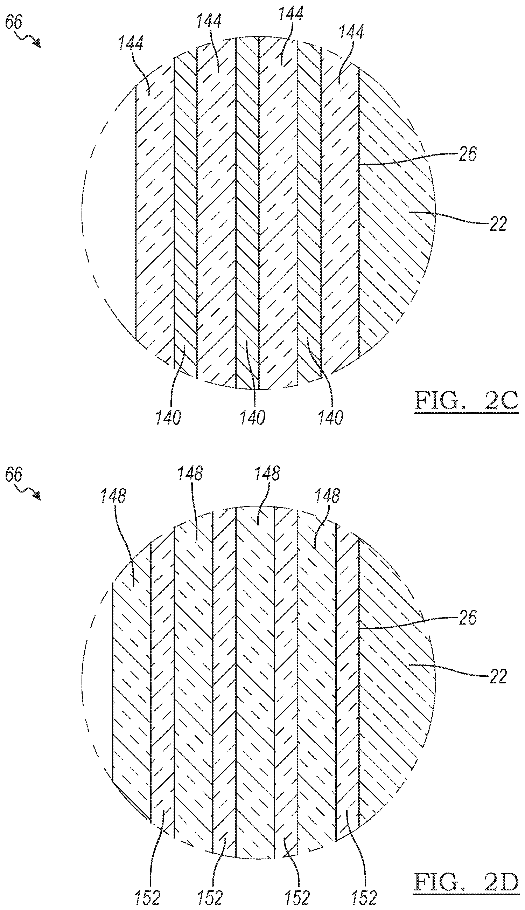

Referring now to FIG. 2C, in a split reflector configuration or a triple reflector configuration, a metal is "split" into two or more metal layers 140, thickness-wise, and a dielectric layer 144 is positioned between the metal layers 140. The metal used in the metal layers 140 may be silver, copper, gold, chromium, aluminum, other lustrous metals, low refractive index metals or combinations thereof. In some examples, each of the metal layers 140 may be made of a different metal or combination of metals. The metal layers 140 may have a thickness of between about 5.0 nm to about 20.0 nm. In a specific example, the metal layers 140 may be about 10 nm. The dielectric layers 144 are positioned on the second substrate 38 and between each of the metal layers 140. The dielectric layers 144 may include at least one dielectric material. Exemplary dielectric materials include SiO₂, Ta₂O₅, Nb₂O₅, TiO₂, HfO₂, ITO, AZO, IZO and combinations thereof. The dielectric layers 144 may have a thickness between about 10 nm and about 100 nm, or between about 20 nm and about 50 nm. In specific examples, the dielectric layers 144 may be about 23 nm or about 46 nm. In the split reflector (e.g., split silver) examples of the reflective film 66, there may be two metal layers 140 and two or more dielectric layers 144. In triple reflector (triple silver) examples of the reflective film 66, there may be 3 metal layers 140 and two or more dielectric layers 144. In split reflector and triple reflector examples, the metal layers 144 and the dielectric layers 144 may be alternately stacked on one another. It will be understood that the thicknesses, refractive indexes, or other properties of the metal layers 140 and the dielectric layers 144 may be altered in a different manner than described above in order to achieve a reflectivity of a certain wavelength, or band of electromagnetic radiation, without departing from the scope of the claims. In some examples, the split reflector and triple reflector examples of the reflective film 66 may incorporate a thick (e.g., 1 nm to about 50 nm) layer of SiO₂ to allow the reflective film 66 to have a high emissivity. In some examples, the thick layer of SiO₂ may be the top, or last, layer of the reflective film 66. This may be advantageous in that it would allow heat, which is generated or otherwise present in the electro-optic element 18 or window assembly 10, to be safely radiated toward the sunlit direction, and not toward a viewer.

Referring now to FIG. 2D, the reflective film 66 may be a stack of alternating dielectric materials configured to reflect near-infrared radiation. In such an example, the reflective film 66 may include a first dielectric layer 148 and a second dielectric layer 152. The first and second dielectric layers 148, 152 are arranged in a dielectric stack (i.e., a grouping of the first and second dielectric layers 148, 152 based on physical properties). It will be understood that although depicted with one dielectric stack, the reflective film 66 may have two or more stacks of the first or second dielectric layers 148, 152, each stack varying properties such as thickness and refractive index of the layers. The reflective film 66 may contain a single layer or between one and one hundred layers (e.g., the first and second dielectric layers 148, 152). The first and second dielectric layers 148, 152 are positioned in an alternating manner and include one or more dielectric materials. Exemplary dielectric materials include SiO₂, Ta₂O₅, NbO₅, TiO₂, HfO₂, and combinations thereof. In some examples, each layer 148, 152 may be a single dielectric material. In a specific example, the first dielectric layer 148 may be SiO₂ and the second dielectric layer 152 may be Ta₂O₅. The thickness of the first and second dielectric layers 148, 152 may each be between about 5 nm and about 200 nm. In some examples, the thickness of the first and second dielectric layers 148, 152 may be different than one another and optionally vary across the thickness of the reflective film 66. In some examples, the choice of which dielectric material to use for the alternating first and second dielectric layers 148, 152 may be based on the refractive index of the material in order to increase or decrease the reflectivity of the reflective film 66. For example, a high refractive index material (e.g., Ta₂O₅, NbO₅, TiO₂, HfO₂) may be included in the first dielectric layer 148 and a low refractive index material (e.g., SiO₂) may be included in the second dielectric layer 152. In various examples, high refractive index materials may have indices greater than about 1.9, greater than about 2.0, greater than about 2.1, greater than about 2.2, greater than about 2.3, or greater than about 2.4. In various examples, low index of refraction materials may have refractive indices of less than about 1.5, less than about 1.4, or less than about 1.3. In some examples, the upper most layer (e.g., first or second dielectric layer 148, 152) includes a high refractive index material (e.g., Ta₂O₅, NbO₅, TiO₂, HfO₂). While a near-infrared light cut off of the split and triple reflector configurations of the reflective film 66 may be a function of a conductivity of the film 66, the near-infrared cutoff of the dielectric configurations is more flexible by design. It will be understood that the thicknesses, refractive indexes, or other properties of the first and second dielectric layers 148, 152 may be altered in a different manner than described above in order to achieve a reflectivity of a certain wavelength, or band of electromagnetic radiation, without departing from the scope of the claims. Such a stack of alternating dielectric materials may be advantageous in the flexibility of design offered.

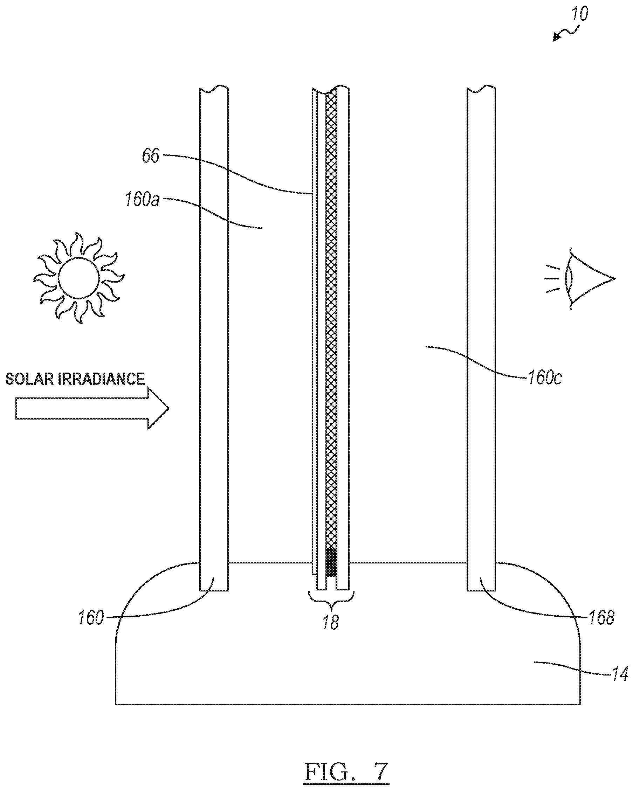

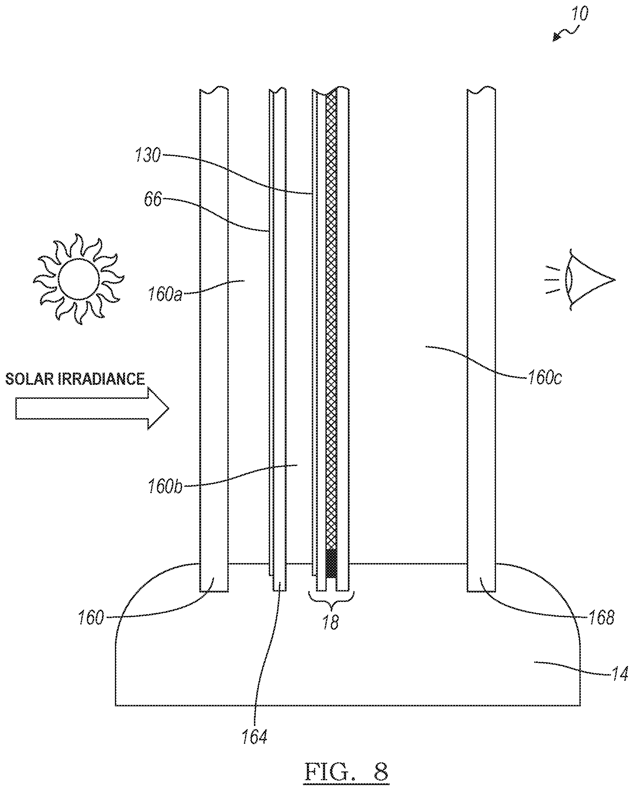

Referring now to FIGS. 7 and 8, depicted is a multi-pane embodiment of the window assembly 10 according to the invention incorporating the electro-optic element 18. The multi-pane window assembly 10 includes a first pane 160, a second pane 164 and a third pane 168. The first, second and/or third panes 160, 164, 168 may include a glass, a plastic or other substantially transparent materials. Between the first, second and third panes 160, 164, 168 and the electro-optic element 18 are a first interpane gap 160A, a second interpane gap 160B and a third interpane gap 160C. Arbitrary widths of the interpane gaps 160A, 160B and 160C and materials have been chosen for the following examples. It will be understood that changes in the first, second and/or third interpane gaps 160A, 160B, 160C may result in different conductive and convective heat transfer rates as will the thermal conductivity and thickness of the first, second and third panes 160,164, 168. The interpane gaps 160A, 160B, 160C may be filled with a gas such as air, nitrogen, Argon, Krypton, other gases or combinations thereof. In another example, the first, second and/or third interpane gaps 160A, 160B, 160C may have a gas pressure of less than 1 atm, less than 0.5 atm, less than 0.1 atm, or less than about 0.01 atm.

Referring now to FIG. 7, the electro-optic element 18 may be packaged into the multi-pane example of the window assembly 10 with one or more adjacent panels (e.g., the first and third panes 160,168). In the depicted embodiment, the first and third panes 160, 168 are positioned proximately, and on opposite sides of, the electro-optic element 18. As described herein, the light absorbed by the electro-optic element 18 may be converted to heat which may be dissipated. The packaging of the electro-optic element 18 next to additional panes (e.g., between the first and third panes 160, 168) traps heat by limiting convective heat transfer and absorptive trapping of radiated infrared energy from the electro-optic element 18. The trapped energy may drive the window assembly 10 to elevated temperatures. According to one example, the electro-optic element 18 is an electrochromic element in its dark state, as described above, and the first and third panes 160, 168 are 6 mm soda-lime glass lites spaced apart 0.5 inches from the electro-optic element 18. For such an example having an exterior temperature of 49 °C and an interior temperature of 25 °C under normal incidence solar irradiance of 1 sun (ASTM-G173, 1120 W/m²) the surface temperatures of the 6 surfaces (e.g., each side of the first and third panes 160, 168 and the first and fourth surfaces 26, 46 of the electro-optic element 18) from exterior to interior, respectively, are provided in Table 1.

**Table 1:**

| Exterior | 160ₑₓₜₑᵣᵢₒᵣ | 160ᵢₙₜₑᵣᵢₒᵣ | 18ₑₓₜₑᵣᵢₒᵣ | 18ᵢₙₜₑᵣᵢₒᵣ | 168ₑₓₜₑᵣᵢₒᵣ | 168ᵢₙₜₑᵣᵢₒᵣ | Interior |
|---|---|---|---|---|---|---|---|
| 49°C | 71.9°C | 74.2°C | 103.8°C | 103.7°C | 64.7°C | 62.4°C | 25°C |

For reference, the first and third panes 160, 168 both remain below 55 °C under the same conditions if the electro-optic element 18 is not present. The addition of an alternating dielectric example of the reflective film 66 (e.g., having fifty six alternating layers) to the exterior facing surface (e.g., the fourth surface 46) of the electro-optic element 18 reduces the surface temperatures to that provided in Table 2.

**Table 2:**

| Exterior | 160ₑₓₜₑᵣᵢₒᵣ | 160ᵢₙₜₑᵣᵢₒᵣ | 18ₑₓₜₑᵣᵢₒᵣ | 18ᵢₙₜₑᵣᵢₒᵣ | 168ₑₓₜₑᵣᵢₒᵣ | 168ᵢₙₜₑᵣᵢₒᵣ | Interior |
|---|---|---|---|---|---|---|---|
| 49°C | 68.3 | 69.9 | 85.6 | 85.5 | 53.6 | 52.0 | 25°C |

Referring now to FIG. 8, the multi-pane window assembly 10 according to the invention includes the first, second and third panes 160, 164, 168. According to one embodiment, the electro-optic element 18 is an electrochromic element in its dark state and the first and third panes 160, 168 are 6 mm thick soda-lime glass lites spaced apart 0.5 inches from the electro-optic element 18. In such an example, the second pane 164 is a 0.7 mm lite of borosilicate glass incorporating the fifty six layer example of the reflective film 66 on its exterior facing surface. For an exterior temperature of 49 °C and an interior temperature of 25 °C under normal incidence solar irradiance of 1 sun (ASTM-G173, 1120 W/m²) the surface temperatures of the eight surfaces (e.g., each side of the first, second and third panes 160, 164, 168 and the first and fourth surfaces 26, 46 of the electro-optic element 18) from exterior to interior, respectively, are provided in Table 3:

**Table 3:**

| Exterior | 160ₑₓₜₑᵣᵢₒᵣ | 160ᵢₙₜₑᵣᵢₒᵣ | 164ₑₓₜₑᵣᵢₒᵣ | 164ᵢₙₜₑᵣᵢₒᵣ | 18ₑₓₜₑᵣᵢₒᵣ | 18ᵢₙₜₑᵣᵢₒᵣ | 168ₑₓₜₑᵣᵢₒᵣ | 168ᵢₙₜₑᵣᵢₒᵣ | Interior |
|---|---|---|---|---|---|---|---|---|---|
| 49°C | 66.7 | 68.1 | 78.7 | 78.8 | 86.0 | 85.9 | 53.9 | 52.2 | 25°C |

The reflective film 66 provides essentially the same benefit as in the previous example. The addition of the second pane 164, however, provides the additional interpane gap 160B which aids in insulating the first pane 160 from the electro-optic element 18.

In some applications, one or more of the first, second and/or third panes 160, 164, 168 may be temperature sensitive. The temperature sensitivity might be due to thermal stress buildup, such as is the case for large building windows, or might be material property related, such as the glass transition temperature of polymer materials. The addition of the reflective film 66 and the low emissive coating 130 can be used to control the heating of the adjacent panes and surfaces. This solution might also be utilized to control surface temperatures for the comfort of individuals close to, or in contact with, those surfaces.

In another embodiment based on FIG. 8, the reflective film 66 may be the fifty six layer example described above and include the low emissivity coating 130 (e.g., the split silver example) described herein and added to the exterior facing surface of the third pane 168. For an exterior temperature of 49 °C and an interior temperature of 25 °C under normal incidence solar irradiance of 1 sun (ASTM-G173, 1120 W/m2) the surface temperatures of the 8 surfaces (e.g., each side of the first, second and third panes 160, 164, 168 and the first and fourth surfaces 26, 46 of the electro-optic element 18) from exterior to interior, respectively, are provided in Table 4.

**Table 4:**

| Exterior | 160ₒᵤₜₑᵣ | 160ᵢₙₙₑᵣ | 164ₒᵤₜₑᵣ | 164ᵢₙₙₑᵣ | 18ₒᵤₜₑᵣ | 18ᵢₙₙₑᵣ | 168ₒᵤₜₑᵣ | 168ᵢₙₙₑᵣ | Interior |
|---|---|---|---|---|---|---|---|---|---|
| 49°C | 65.8 | 67.1 | 75 | 75.1 | 85.6 | 85.4 | 53.5 | 51.9 | 25°C |

The addition of the low emissive coating 130 to the exterior facing surface (e.g., the fourth surface 46) of the electro-optic element 18 prevents radiant emission in the direction of the first and second panes 160, 164. This results in less heating of the first and second panes 160, 164.

It will be understood that reflective film 66 and low emissive coating 130 can be placed on different surfaces of the window assembly 10 yielding similar, higher or lower performance than the specific examples given here. Also, it will be understood that for the purposes of low emissivity in the 10 micron wavelength region, simpler coatings such as half-wave ITO (∼150nm) would be effective. In the same spirit, a fifty six layer example of the reflective film 66 described herein can be replaced with a thinner twenty four layer stack. Such a twenty four layer example of the reflective film 66 is provided in Table 5.

**Table 5:**

| Layer | Material | Refractive Index | Optical Thickness (QWOT) | Physical Thickness (nm) |
|---|---|---|---|---|
| Medium | Air | 1 | | |
| 1 | SiO₂ | 1.450 | 0.915 | 86.78 |
| 2 | Nb₂O₅ | 2.222 | 1.873 | 115.92 |
| 3 | SiO₂ | 1.450 | 1.917 | 181.74 |
| 4 | Nb₂O₅ | 2.222 | 1.854 | 114.76 |
| 5 | SiO₂ | 1.450 | 1.899 | 180.03 |
| 6 | Nb₂O₅ | 2.222 | 1.947 | 120.49 |
| 7 | SiO₂ | 1.450 | 1.955 | 185.36 |
| 8 | Nb₂O₅ | 2.222 | 1.798 | 111.28 |
| 9 | SiO₂ | 1.450 | 1.879 | 178.15 |
| 10 | Nb₂O₅ | 2.222 | 1.996 | 123.5 |
| 11 | SiO₂ | 1.450 | 1.977 | 187.48 |
| 12 | Nb₂O₅ | 2.222 | 1.769 | 109.45 |
| 13 | SiO₂ | 1.450 | 1.743 | 165.23 |
| 14 | Nb₂O₅ | 2.222 | 1.428 | 88.4 |
| 15 | SiO₂ | 1.450 | 1.544 | 146.42 |
| 16 | Nb₂O₅ | 2.222 | 1.420 | 87.86 |
| 17 | SiO₂ | 1.450 | 1.497 | 141.91 |
| 18 | Nb₂O₅ | 2.222 | 1.447 | 89.56 |
| 19 | SiO₂ | 1.450 | 1.496 | 141.82 |
| 20 | Nb₂O₅ | 2.222 | 1.457 | 90.17 |
| 21 | SiO₂ | 1.450 | 1.578 | 149.62 |
| 22 | Nb₂O₅ | 2.222 | 1.371 | 84.83 |
| 23 | SiO₂ | 1.450 | 1.632 | 154.73 |
| 24 | Nb₂O₅ | 2.222 | 1.518 | 93.93 |
| Substrate | Glass | 1.505 | | |

In another embodiment based on FIG. 8, the electro-optic element 18 is an electrochromic element in its dark state as described herein and the first, second and third panes 160,164, 168 are Acrylic (PMMA). The first pane 160 is 10 mm thick, the second pane 164 is 5 mm thick and is spaced apart from first pane 160 by about 8 mm and the third pane 168 is spaced apart from the second pane 164 by about 25 mm. The third pane 168 is about 3 mm thick and is spaced apart from the electro-optic element 18 by about 30 mm. For an exterior temperature of 49 °C and an interior temperature of 25 °C under normal incidence solar irradiance of 1 sun (ASTM-G173, 1120 W/m2) the surface temperatures of the eight surfaces (e.g., each side of the first second and third panes 160, 164, 168 and the first and fourth surfaces 26, 46 of the electro-optic element 18) from exterior to interior, respectively, are provided in Table 6.

**Table 6:**

| Exterior | 10ₑₓₜₑᵣᵢₒᵣ | 160ᵢₙₜₑᵣᵢₒᵣ | 164ₑₓₜₑᵣᵢₒᵣ | 164ᵢₙₜₑᵣᵢₒᵣ | 18ₑₓₜₑᵣᵢₒᵣ | 18ᵢₙₜₑᵣᵢₒᵣ | 168ₑₓₜₑᵣᵢₒᵣ | 168ᵢₙₜₑᵣᵢₒᵣ | Interior |
|---|---|---|---|---|---|---|---|---|---|
| 49°C | 65.6 | 81 | 98.7 | 104.4 | 121.2 | 121 | 76.5 | 69.6 | 25°C |

The glass transition temperature, or Tg, of typical PMMA is approximately 105°C and can range from approximately 85°C to 165°C for different compositions. Driving a polymer material close to or beyond its Tg in use is generally not preferred. It may therefore be preferred to reduce the temperature load by the means discussed herein. The addition of the fifty six layer example of the reflective film 66 to the inner surface of the second pane 164 and a split silver example of the low emissivity coating 130 to the exterior surface (e.g., the fourth surface 46) of the electro-optic element 18 reduces the temperatures to that provided in table 7. The addition of the reflective film 66 and the low emissive coating 130 reduces the surface temperature of the second pane 164 by over 24°C.

**Table 7:**

| Exterior | 160ₑₓₜₑᵣᵢₒᵣ | 160ᵢₙₜₑᵣᵢₒᵣ | 164ₑₓₜₑᵣᵢₒᵣ | 164ᵢₙₜₑₙₒᵣ | 18ₑₓₜₑᵣᵢₒᵣ | 18ᵢₙₜₑᵣᵢₒᵣ | 168ₑₓₜₑᵣᵢₒᵣ | 168ᵢₙₜₑᵣᵢₒᵣ | Interior |
|---|---|---|---|---|---|---|---|---|---|
| 49°C | 59.7 | 67.6 | 74.3 | 74.6 | 92.1 | 92 | 58.5 | 54.2 | 25°C |

### Examples

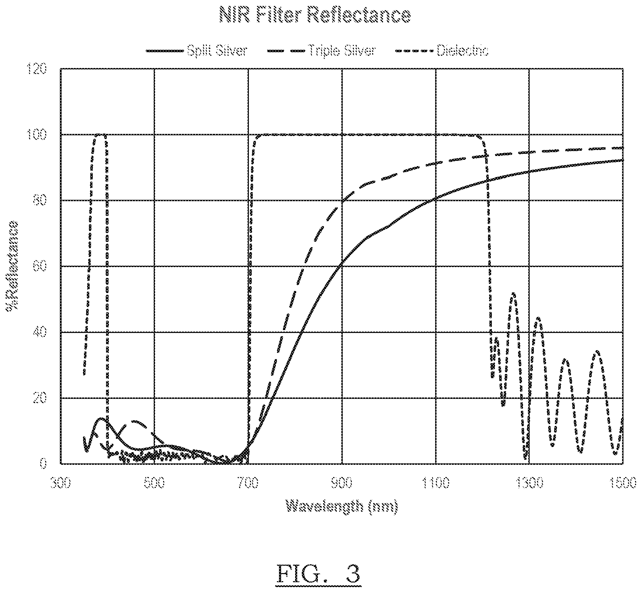

FIGS. 3-5B illustrate graphs depicting the reflectance, absorption, or transmittance of specific examples and embodiments of the window assembly 10 made according to various aspects of this disclosure.

FIG. 3 depicts the reflectance values for several near-infrared filters (e.g., the reflective film 66) positioned on a glass sample (e.g., the second substrate 38, the window assembly 10 or the electro-optic element 18). The graph depicts data of a dielectric filter having fifty six alternating layers of SiO₂ (e.g., the first dielectric layer 148) and TiO₂ (e.g., the second dielectric layer 152) with the TiO₂ layer being thinner and having a higher refractive index than the SiO₂ layer. Table 8 provides information on the fifty six layer example of the dielectric filter.

**Table 8:**

| **Layer** | **Material** | **Refractive Index** | **Optical Thickness (QWOT)** | **Physical Thickness (nm)** |
|---|---|---|---|---|
| Medium | Air | 1.000 | | |
| 1 | SiO₂ | 1.460 | 0.909 | 85.610 |
| 2 | TiO₂ | 2.447 | 1.794 | 100.800 |
| 3 | SiO₂ | 1.460 | 1.876 | 176.690 |
| 4 | TiO₂ | 2.447 | 1.873 | 105.250 |
| 5 | SiO₂ | 1.460 | 1.921 | 180.910 |
| 6 | TiO₂ | 2.447 | 1.911 | 107.400 |
| 7 | SiO₂ | 1.460 | 1.919 | 180.740 |
| 8 | TiO₂ | 2.447 | 1.928 | 108.320 |
| 9 | SiO₂ | 1.460 | 1.937 | 182.400 |
| 10 | TiO₂ | 2.447 | 1.922 | 107.970 |
| 11 | SiO₂ | 1.460 | 1.936 | 182.310 |
| 12 | TiO₂ | 2.447 | 1.919 | 107.830 |
| 13 | SiO₂ | 1.460 | 1.941 | 182.840 |
| 14 | TiO₂ | 2.447 | 1.938 | 108.890 |
| 15 | SiO₂ | 1.460 | 1.928 | 181.620 |
| 16 | TiO₂ | 2.447 | 1.924 | 108.110 |
| 17 | SiO₂ | 1.460 | 1.937 | 182.400 |
| 18 | TiO₂ | 2.447 | 1.932 | 108.560 |
| 19 | SiO₂ | 1.460 | 1.943 | 182.980 |
| 20 | TiO₂ | 2.447 | 1.909 | 107.250 |
| 21 | SiO₂ | 1.460 | 1.926 | 181.350 |
| 22 | TiO₂ | 2.447 | 1.941 | 109.030 |
| 23 | SiO₂ | 1.460 | 1.920 | 180.860 |
| 24 | TiO₂ | 2.447 | 1.899 | 106.680 |
| 25 | SiO₂ | 1.460 | 1.907 | 179.570 |
| 26 | TiO₂ | 2.447 | 1.872 | 105.160 |
| 27 | SiO₂ | 1.460 | 1.856 | 174.810 |
| 28 | TiO₂ | 2.447 | 1.723 | 96.790 |
| 29 | SiO₂ | 1.460 | 1.672 | 157.450 |
| 30 | TiO₂ | 2.447 | 1.540 | 86.530 |
| 31 | SiO₂ | 1.460 | 1.611 | 151.700 |
| 32 | TiO₂ | 2.447 | 1.491 | 83.760 |
| 33 | SiO₂ | 1.460 | 1.582 | 149.020 |
| 34 | TiO₂ | 2.447 | 1.480 | 83.180 |
| 35 | SiO₂ | 1.460 | 1.553 | 146.220 |
| 36 | TiO₂ | 2.447 | 1.479 | 83.080 |
| 37 | SiO₂ | 1.460 | 1.552 | 146.180 |
| 38 | TiO₂ | 2.447 | 1.465 | 82.300 |
| 39 | SiO₂ | 1.460 | 1.560 | 146.890 |
| 40 | TiO₂ | 2.447 | 1.460 | 82.050 |
| 41 | SiO₂ | 1.460 | 1.557 | 146.650 |
| 42 | TiO₂ | 2.447 | 1.461 | 82.080 |
| 43 | SiO₂ | 1.460 | 1.549 | 145.920 |
| 44 | TiO₂ | 2.447 | 1.463 | 82.210 |
| 45 | SiO₂ | 1.460 | 1.552 | 146.220 |
| 46 | TiO₂ | 2.447 | 1.456 | 81.780 |
| 47 | SiO₂ | 1.460 | 1.561 | 146.990 |
| 48 | TiO₂ | 2.447 | 1.446 | 81.230 |
| 49 | SiO₂ | 1.460 | 1.563 | 147.240 |
| 50 | TiO₂ | 2.447 | 1.473 | 82.740 |
| 51 | SiO₂ | 1.460 | 1.560 | 146.890 |
| 52 | TiO₂ | 2.447 | 1.498 | 84.160 |
| 53 | SiO₂ | 1.460 | 1.579 | 148.690 |
| 54 | TiO₂ | 2.447 | 1.537 | 86.380 |
| 55 | SiO₂ | 1.460 | 1.697 | 159.860 |
| 56 | TiO₂ | 2.447 | 1.667 | 93.660 |
| Substrate | Glass | 1.516 | | |

The split silver filter (e.g., split reflector example of reflective film 66) includes five alternating layers of TiO₂ (e.g., the dielectric layer 144) and silver (e.g., the metal layer 140). The silver layers have a thickness of about 10 nm and the TiO₂ layers have alternating thicknesses of about 23 nm and about 46 nm. Data relating to the split silver example is depicted in Table 9.

**Table 9:**

| **Split Silver** | | | | |
|---|---|---|---|---|
| **Layer** | **Material** | **Refractive Index** | **Optical Thickness (QWOT)** | **Physical** |
| | | | | **Thickness** |
| | | | | **(nm)** |
| Medium | Air | 1 | | |
| 1 | TiO₂ | 3.270 | 1.000 | 22.940 |
| 2 | Ag | 1.670 | 0.223 | 10.000 |
| 3 | TiO₂ | 3.270 | 2.000 | 45.880 |
| 4 | Ag | 1.670 | 0.223 | 10.000 |
| 5 | TiO₂ | 3.270 | 1.000 | 22.940 |
| Substrate | Glass | 1.552 | | |

The triple silver filter (e.g., the triple reflector example of the reflective film 66) includes seven alternating layers of TiO₂ (e.g., the dielectric layer 144) and silver (e.g., the metal layer 140). The silver layers have a thickness of about 10 nm and the TiO₂ layers have thicknesses of either about 23 nm or about 46 nm. As can be seen by the graph, the sample dielectric filter provides a high level of reflectance over a spectral band from about 700 nm to about 1200 nm. In contrast, the split silver and triple silver filters provide a slowly growing reflectance with increasing wavelength and a greater level of reflectance than the dielectric filter after about 1200 nm. Data relating to the triple silver filter example is provided in Table 10.

**Table 10:**

| **Triple Silver** | | | | |
|---|---|---|---|---|
| **Layer** | **Material** | **Refractive Index** | **Optical Thickness (QWOT)** | **Physical Thickness (nm)** |
| Medium | Air | 1 | | |
| 1 | TiO₂ | 3.270 | 1.000 | 22.940 |
| 2 | Ag | 1.670 | 0.223 | 10.000 |
| 3 | TiO₂ | 3.270 | 2.000 | 45.880 |
| 4 | Ag | 1.670 | 0.223 | 10.000 |
| 5 | TiO₂ | 3.270 | 2.000 | 45.880 |
| 6 | Ag | 1.670 | 0.223 | 10.000 |
| 7 | TiO₂ | 3.270 | 1.000 | 22.940 |
| Substrate | Glass | 1.552 | | |

According to another example, the near-infrared dielectric filter may have twenty four layers. Data relating to the twenty four layer example of the near-infrared dielectric filter is provided in Table 11.

**Table 11:**

| **Layer** | **Material** | **Index** | **Thickness** | **Thickness** |
|---|---|---|---|---|
| | | | **(QWOT)** | **(nm)** |
| Medium | Air | 1.000 | | |
| 1 | SiO₂ | 1.460 | 0.921 | 86.78 |
| 2 | Nb₂O₅ | 2.326 | 1.961 | 115.92 |
| 3 | SiO₂ | 1.460 | 1.929 | 181.74 |
| 4 | Nb₂O₅ | 2.326 | 1.941 | 114.76 |
| 5 | SiO₂ | 1.460 | 1.911 | 180.03 |
| 6 | Nb₂O₅ | 2.326 | 2.038 | 120.49 |
| 7 | SiO₂ | 1.460 | 1.968 | 185.36 |
| 8 | Nb₂O₅ | 2.326 | 1.883 | 111.28 |
| 9 | SiO₂ | 1.460 | 1.892 | 178.15 |
| 10 | Nb₂O₅ | 2.326 | 2.089 | 123.5 |
| 11 | SiO₂ | 1.460 | 1.991 | 187.48 |
| 12 | Nb₂O₅ | 2.326 | 1.852 | 109.45 |
| 13 | SiO₂ | 1.460 | 1.754 | 165.23 |
| 14 | Nb₂O₅ | 2.326 | 1.490 | 88.10 |
| 15 | SiO₂ | 1.460 | 1.555 | 146.42 |
| 16 | Nb₂O₅ | 2.326 | 1.486 | 87.86 |
| 17 | SiO₂ | 1.460 | 1.507 | 141.91 |
| 18 | Nb₂O₅ | 2.326 | 1.515 | 89.56 |
| 19 | SiO₂ | 1.460 | 1.506 | 141.82 |
| 20 | Nb₂O₅ | 2.326 | 1.525 | 90.17 |
| 21 | SiO₂ | 1.460 | 1.589 | 149.62 |
| 22 | Nb₂O₅ | 2.326 | 1.435 | 84.83 |
| 23 | SiO₂ | 1.460 | 1.643 | 154.73 |
| 24 | Nb₂O₅ | 2.326 | 1.589 | 93.93 |
| Substrate | Glass | 1.516 | | |

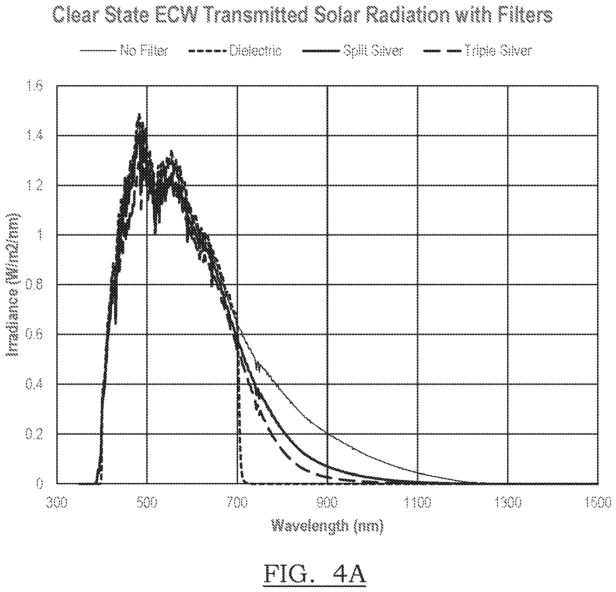

Referring now to FIG. 4A, the transmitted solar radiation of an electrochromic window (e.g., window assembly 10, vehicle window assembly 10A, or electro-optic element 18) in its clear state with no filter, and with the dielectric, split silver, and triple silver filters (e.g., reflective film 66) is depicted. As can be seen, the dielectric filter provides the greatest level of cut-off in transmittance in wavelengths greater than about 700 nm with the transmittance of split silver and triple silver filters decreasing with increasing wavelength above about 700 nm.

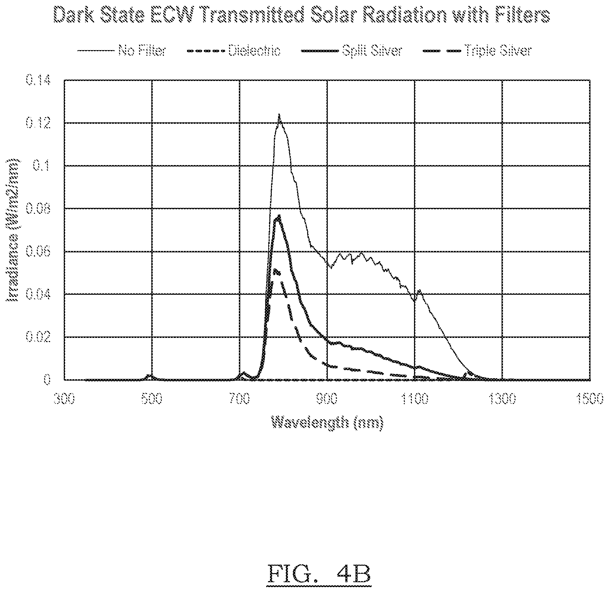

Referring now to FIG. 4B, the transmitted solar radiation of an electrochromic window (e.g., electro-optic element 18, vehicle window assembly 10A, or window assembly 10) in its darkened state with no filter, and with the dielectric, split silver, and triple silver filters (e.g., reflective film 66) is depicted. As can be seen, the dielectric filter allows the transmission of the least amount of solar radiation of the filters. The decreased transmission of near-infrared wavelengths through the electrochromic window would decrease a perceived "hot" feeling by a viewer located on a non-sunlit side of the electrochromic window. Additionally, by reflecting the near-infrared wavelengths before they enter the electrochromic window, the thermal load absorbed by the window may be reduced. Reduction of the thermal load of the electrochromic window may be advantageous as heat based failure modes of the electrochromic window may be avoided and secondary heating of a vehicle or building to which the electrochromic window is coupled may be decreased.

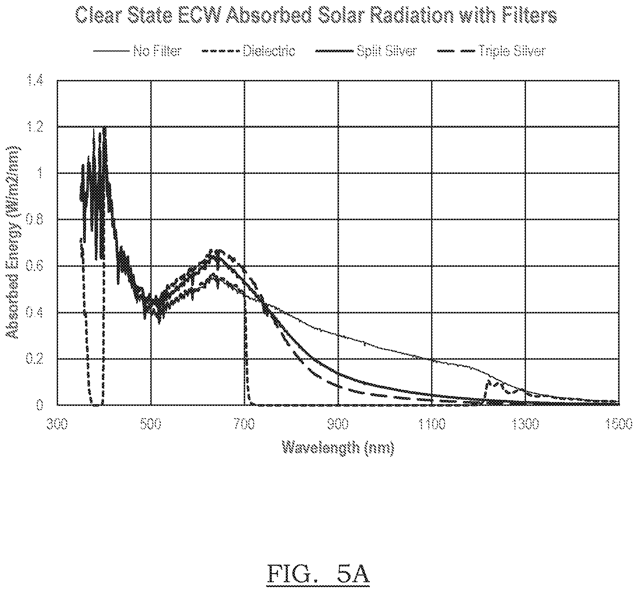

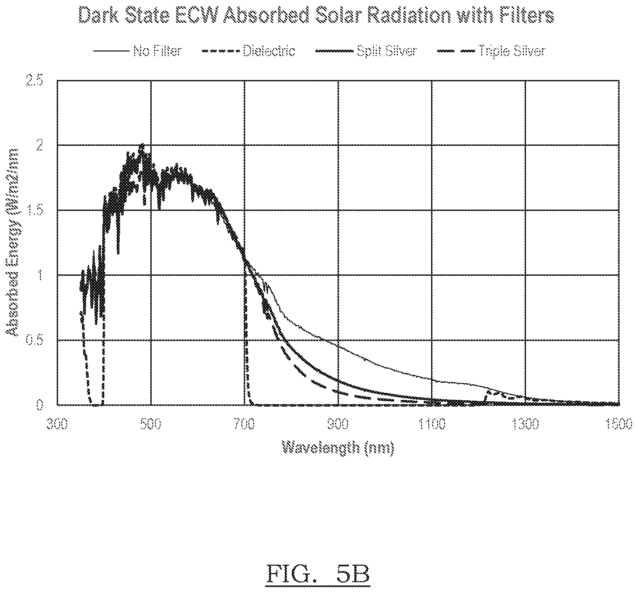

Referring now to FIGS. 5A and 5B, the absorbed solar radiation of an electrochromic window (e.g., electro-optic element 18, vehicle window assembly 10A, or window assembly 10) with no filter, and with the dielectric, split silver, and triple silver filters (e.g., reflective film 66) in the clear state and the darkened state is depicted. As can be seen, the absorbed energy of the electrochromic window utilizing the dielectric filter increases at about 1200 nm. As such, in some examples it may be advantageous to apply a split silver or triple silver filter to the window in addition to the dielectric filter. In such an example, the split silver or triple silver may prevent the absorption of the solar radiation at wavelengths greater than about 1200 nm where the dielectric filter may become less effective.

Referring now to Table 12, the integrated energy from about 350 nm to about 1500 nm for an electrochromic window (e.g., window assembly 10, vehicle window assembly 10A, or electro-optic element 18) is shown. As can be seen, the dielectric filter (e.g., reflective film 66) provides the greatest protection to the transmission or absorption of electromagnetic energy having a wavelength between about 350 nm and about 1500 nm. As can be seen, use of the dielectric filter (e.g., reflective film 66) reduces the absorbed energy of the electrochromic window (e.g., window assembly 10, vehicle window assembly 10A, or electro-optic element) by about half in the clear state and reduces the absorbed energy in the dark state by about 32%.

**Table 12: Integrated Energy from about 350 nm to about 1500 nm.**

| Filter | Transmitted Energy (W/m²) | | Absorbed Energy (W/m²) | |
|---|---|---|---|---|
| | Clear state | Dark State | Clear State | Dark State |
| No Filter | 416 | 26 | 364 | 774 |
| Split Silver | 357 | 9 | 302 | 666 |
| Triple Silver | 327 | 5 | 294 | 631 |
| Dielectric | 323 | 0.2 | 183 | 524 |

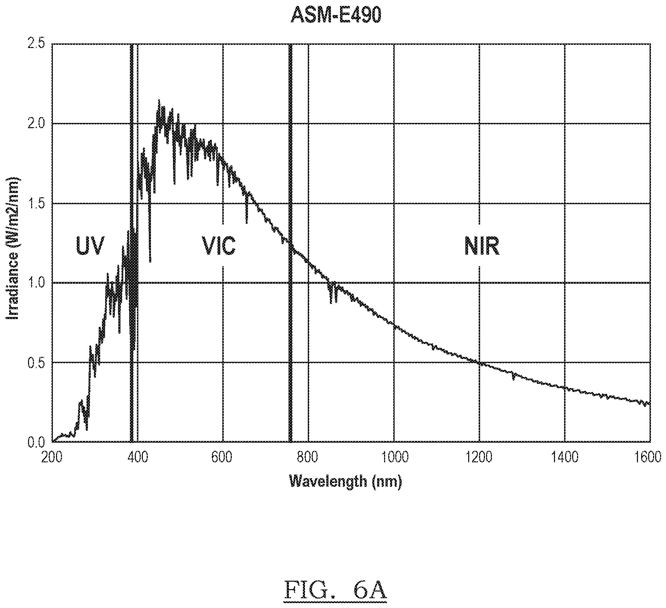

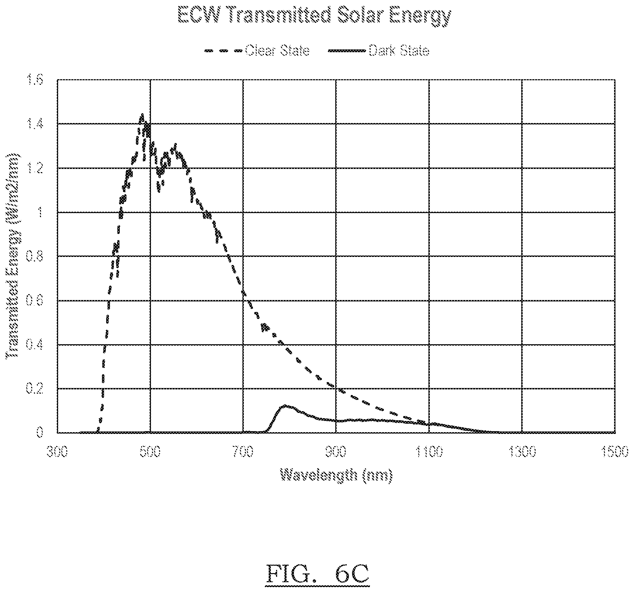

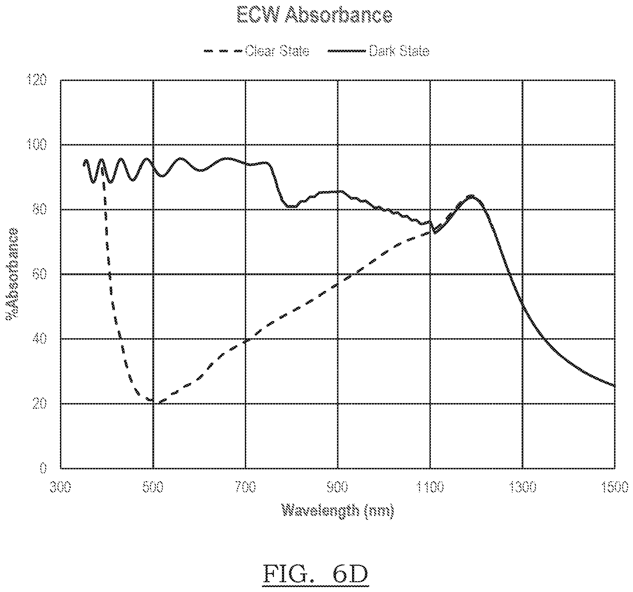

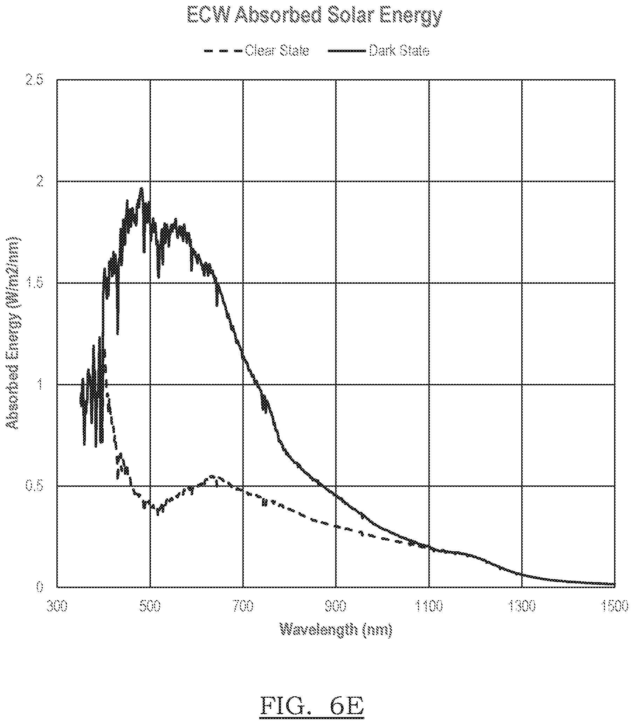

Referring now to FIG. 6A, depicted is extra-terrestrial irradiance spectrum standard ASTM-E490.

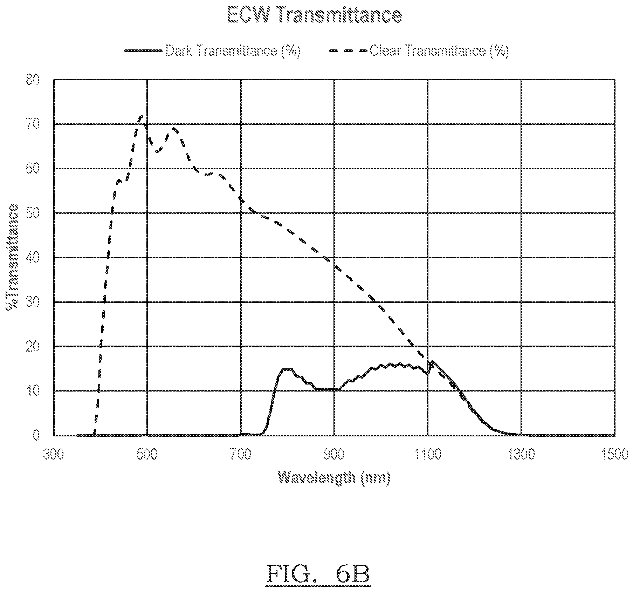

Referring now to FIG. 6B-E, depicted is the transmittance, absorbance, transmitted energy, or absorbed energy of various electrochromic windows (e.g., window assembly 10, vehicle window assembly 10A, or electro-optic element 18) in the clear and darkened states when exposed to the extra-terrestrial irradiance spectrum standard ofASTM-E490. In the clear state the electrochromic window may absorb more than about 20% of the visible light. The absorbance of the electrochromic window climbs quickly approaching 1200 nm and then falls off due to the transparent conductor (e.g., first or second electrically conductive layers 34, 50) which may be indium-tin oxide. In the darkened state, the visible region is absorbed as well, by design, meaning that a significant fraction of incident light may be converted to heat by the electrochromic window. Accordingly, a layer (e.g., the low emissivity coating 130) to prevent the emission of the heat as infrared radiation may be advantageous.

While the examples and embodiments provided herein demonstrate reduction of thermal load through reflection of near-infrared radiation, it should be understood that the disclosure may equally apply to reflection of visible light for the same or a similar purpose. Reduction of clear state visible transmittance in the window assembly 10 may not be preferred, however, in cases where infrared and near-infrared coatings and films are not adequate for controlling temperature of the window assembly 10, it may be preferable to reduce visible light transmittance in the same manner as taught for near-infrared radiation. A new coating may be added to partially reflect visible light prior to its incidence on the electro-optic element 18 and thereby reduce the thermal load on the window assembly 10 and its surrounding components. The visible light reflectance might alternatively be incorporated into the reflective film 66 through modification of its optical design. In addition, the near-infrared reflective design examples disclosed herein may utilize a 700nm low-pass cutoff. It will be understood that the location of the cutoff may be changed to tune either the thermal or optical performance of the assembly 10.

It will be understood that although the electro-optic element 18 has been described herein in connection with an electrochromic device, the electro-optic element 18 may additionally or alternatively use or be a suspended particle device.

Modifications of the disclosure will occur to those skilled in the art and to those who make or use the disclosure. Therefore, it is understood that the embodiments shown in the drawings and described above are merely for illustrative purposes and not intended to limit the scope of the disclosure, which is defined by the following claims.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms: couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature, or may be removable or releasable in nature, unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, and the nature or numeral of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present invention as defined by the claims. Other substitutions, modifications, changes, and omissions may be made in the design, operating conditions, and arrangement of the desired and other exemplary embodiments without departing from the scope of the present invention as defined by the claims.

It will be understood that any described processes, or steps within described processes, may be combined with other disclosed processes or steps to form structures within the scope of the present invention. The exemplary structures and processes disclosed herein are for illustrative purposes and are not to be construed as limiting.

It is also to be understood that variations and modifications can be made on the aforementioned structures and methods without departing from the concepts of the present disclosure as long as they are covered by the following claims, unless these claims by their language expressly state otherwise.

## Claims

1. A window assembly (10), comprising:
an electro-optic element (18), comprising:
a first substantially transparent substrate (22) defining first and second surfaces (26, 30), wherein the second surface (30) comprises a first electrically conductive layer (34);
a second substantially transparent substrate (38) defining third and fourth surfaces (42, 46), wherein the third surface (42) comprises a second electrically conductive layer (50) and a cavity (58) is defined between the first substantially transparent substrate (22) and second substantially transparent substrates (38); and
an electro-optic medium (62) disposed in the cavity (58), the electro-optic medium (62) being variably transmissive such that the electro-optic element (18) is operable between substantially clear and darkened states,
wherein the window assembly (10) further comprises:
a first pane (160) positioned proximate the first surface (26) of the electro-optic element (18); an infrared reflective film (66) positioned on a surface of the window assembly (10) on an outward side of the electro-optic element (18); and
a third pane (168) positioned proximate to the fourth surface (46) of the electro-optic element (18)
**characterized in that**
the first pane (160) is spaced apart from the electro-optic element (18) by a first gap (160a) and
the third pane (168) is separated from the electro-optic element (18) by a third interpane gap (160c), wherein the interpane gaps (160a, 160c) separate the panes (160, 168) from the electro-optic element (18) by an air space.

2. The window assembly (10) of claim 1, wherein the infrared reflective film (66) is positioned on at least one of the electro-optic element (18) and the first pane (160).

3. The window assembly (10) of either of claims 1 or 2, wherein the electro-optic medium (62) is an electrochromic medium.

4. The window assembly (10) of claim 3, wherein the electrochromic medium includes at least one solvent, at least one anodic material, and at least one cathodic material.

5. The window assembly (10) of any of claims 1-4, wherein the infrared reflective film (66) includes at least one of an alternating dielectric stack, a split silver film, or a triple silver film.

6. The window assembly (10) of claim 5, wherein the infrared reflective film (66) includes an alternating dielectric stack and at least one of a split silver film, or a triple silver film.

7. The window assembly (10) of any of claims 1-6, wherein a low emissivity coating (130) is positioned on the electro-optic element (18).

8. The window assembly (10) of claim 7, wherein the low emissivity coating (130) has an emissivity of less than about 0.1.

9. The window assembly of claim 1, further comprising:
a second pane (164) positioned between first pane (160) and the first surface (26) of the electro-optic element (18).

10. The window assembly of claim 9, wherein the first interpane gap (160a) is between the first pane (160) and the second pane (164), and a second interpane gap (160b) is formed between the second pane (164) and the first surface (26) of the electro-optic element (18).

11. The window assembly of any of claims 9-10, wherein the infrared reflective film (66) is positioned on at least one of the first pane (160), the second pane (164), and the electro-optic element (18).

12. The window assembly of any of claims 1-11, wherein the infrared reflective film (66) comprises a stack of alternating materials.

13. The window assembly of claim 12,
wherein the stack of alternating materials includes at least one dielectric layer, and
wherein the stack of alternating materials preferably includes at least two different dielectric layers.

## Patentansprüche

1. Eine Fensteranordnung (10), die Folgendes umfasst:
ein elektro-optisches Element (18), das Folgendes umfasst:
ein erstes im Wesentlichen transparentes Substrat (22), das eine erste und eine zweite Oberfläche (26, 30) definiert, wobei die zweite Oberfläche (30) eine erste elektrisch leitende Schicht (34) umfasst;
ein zweites im Wesentlichen transparentes Substrat (38), das eine dritte und eine vierte Oberfläche (42, 46) definiert, wobei die dritte Oberfläche (42) eine zweite elektrisch leitende Schicht (50) umfasst und ein Hohlraum (58) zwischen dem ersten im Wesentlichen transparenten Substrat (22) und den zweiten im Wesentlichen transparenten Substraten (38) definiert ist; und
ein elektro-optisches Medium (62), das im Hohlraum (58) angeordnet ist, wobei das elektro-optische Medium (62) auf eine Weise variabel durchlässig ist, dass das elektro-optische Element (18) zwischen im Wesentlichen klaren und abgedunkelten Zuständen betrieben werden kann,
wobei die Fensteranordnung (10) ferner Folgendes umfasst:
eine erste Scheibe (160), die in der Nähe der ersten Oberfläche (26) des elektro-optischen Elements (18) angeordnet ist;
einen infrarot reflektierenden Film (66), der auf einer Oberfläche der Fensteranordnung (10) auf einer Außenseite des elektro-optischen Elements (18) angeordnet ist; und
eine dritte Scheibe (168), die in der Nähe der vierten Oberfläche (46) des elektro-optischen Elements (18) angeordnet ist;
**dadurch gekennzeichnet, dass**
die erste Scheibe (160) vom elektro-optischen Element (18) durch einen ersten Spalt (160a) beabstandet ist und die dritte Scheibe (168) vom elektro-optischen Element (18) durch einen dritten Scheibenzwischenraum (160c) getrennt ist, wobei die Scheibenzwischenräume (160a, 160c) die Scheiben (160, 168) durch einen Luftraum vom elektro-optischen Element (18) trennen.

2. Die Fensteranordnung (10) nach Anspruch 1, wobei der infrarot reflektierende Film (66) auf dem elektro-optischen Element (18) und/oder der ersten Scheibe (160) angeordnet ist.

3. Die Fensteranordnung (10) nach einem der Ansprüche 1 oder 2, wobei das elektro-optische Medium (62) ein elektrochromes Medium ist.

4. Die Fensteranordnung (10) nach Anspruch 3, wobei das elektrochrome Medium mindestens ein Lösungsmittel, mindestens ein anodisches Material und mindestens ein kathodisches Material enthält.

5. Die Fensteranordnung (10) nach einem der Ansprüche 1-4, wobei der infrarot reflektierende Film (66) mindestens einen der Folgenden enthält: einen alternierenden dielektrischen Stapel, eine gespaltene Silberschicht (*split silver film*) oder eine dreifache Silberschicht.

6. Die Fensteranordnung (10) nach Anspruch 5, wobei der infrarot reflektierende Film (66) Folgenden enthält: einen alternierenden dielektrischen Stapel und mindestens eine gespaltene Silberschicht oder eine dreifache Silberschicht.

7. Die Fensteranordnung (10) nach irgendeinem der Ansprüche 1-6, wobei eine Beschichtung (130) mit niedrigem Emissionsvermögen auf dem elektro-optischen Element (18) angeordnet ist.

8. Die Fensteranordnung (10) nach Anspruch 7, wobei die Beschichtung (130) mit niedrigem Emissionsvermögen ein Emissionsvermögen von weniger als etwa 0,1 hat.

9. Die Fensteranordnung nach Anspruch 1, die ferner Folgendes umfasst:
eine zweite Scheibe (164), die zwischen der ersten Scheibe (160) und der ersten Oberfläche (26) des elektro-optischen Elements (18) angeordnet ist.

10. Die Fensteranordnung nach Anspruch 9, wobei sich der erste Scheibenzwischenraum (160a) zwischen der ersten Scheibe (160) und der zweiten Scheibe (164) befindet und ein zweiter Scheibenzwischenraum (160b) zwischen der zweiten Scheibe (164) und der ersten Oberfläche (26) des elektro-optischen Elements (18) gebildet ist.

11. Die Fensteranordnung nach einem der Ansprüche 9-10, wobei der infrarot reflektierende Film (66) auf mindestens einem der Folgenden angeordnet ist: auf der ersten Scheibe (160), auf der zweiten Scheibe (164) und auf dem elektro-optischen Element (18).

12. Die Fensteranordnung nach einem der Ansprüche 1-11, wobei der infrarot reflektierende Film (66) einen Stapel aus alternierenden Materialien umfasst.

13. Die Fensteranordnung nach Anspruch 12,
wobei der Stapel aus alternierenden Materialien mindestens eine dielektrische Schicht enthält, und
wobei der Stapel aus alternierenden Materialien vorzugsweise mindestens zwei verschiedene dielektrische Schichten enthält.

## Revendications

1. Un ensemble fenêtre (10), comprenant :
un élément électro-optique (18), comprenant :
un premier substrat essentiellement transparent (22) définissant des surfaces première et deuxième (26, 30), sachant que la deuxième surface (30) comprend une première couche électriquement conductrice (34) ;
un deuxième substrat essentiellement transparent (38) définissant des surfaces troisième et quatrième (42, 46), sachant que la troisième surface (42) comprend une deuxième couche électriquement conductrice (50) et qu'une cavité (58) est définie entre le premier substrat essentiellement transparent (22) et les deuxièmes substrats essentiellement transparents (38) ; et
un milieu électro-optique (62) disposé dans la cavité (58), le milieu électro-optique (62) étant transmissible de manière variable de manière que l'élément électro-optique (18) peut fonctionner entre des états essentiellement clair et obscurci,
sachant que l'ensemble fenêtre (10) comprend en outre :
une première vitre (160) positionnée à proximité de la première surface (26) de l'élément électro-optique (18) ;
un film réfléchissant dans l'infrarouge (66) positionné sur une surface de l'ensemble fenêtre (10) sur un côté extérieur de l'élément électro-optique (18) ; et
une troisième vitre (168) positionnée à proximité de la quatrième surface (46) de l'élément électro-optique (18) ;
**caractérisé en ce que**
la première vitre (160) est espacée de l'élément électro-optique (18) par un premier espace (160a) et que la troisième vitre (168) est séparée de l'élément électro-optique (18) par un troisième espace inter-panneaux (160c), les espaces inter-panneaux (160a, 160c) séparant les vitres (160, 168) de l'élément électro-optique (18) par un espace d'air.

2. L'ensemble fenêtre (10) d'après la revendication 1, sachant que le film réfléchissant dans l'infrarouge (66) est positionné sur au moins un élément parmi l'élément électro-optique (18) et la première vitre (160).

3. L'ensemble fenêtre (10) d'après la revendication 1 ou 2, sachant que le milieu électro-optique (62) est un milieu électrochrome.

4. L'ensemble fenêtre (10) d'après la revendication 3, sachant que le milieu électrochrome comprend au moins un solvant, au moins un matériau anodique et au moins un matériau cathodique.

5. L'ensemble fenêtre (10) d'après l'une quelconque des revendications 1-4, sachant que le film réfléchissant dans l'infrarouge (66) inclut au moins l'un des éléments suivants : un empilement diélectrique alterné, un film d'argent fendu (*split silver film*) ou un film d'argent triple.

6. L'ensemble fenêtre (10) d'après la revendication 5, sachant que le film réfléchissant dans l'infrarouge (66) inclut un empilement diélectrique alterné et au moins un film d'argent fendu ou un film d'argent triple.

7. L'ensemble fenêtre (10) d'après l'une quelconque des revendications 1-6, sachant qu'un revêtement à faible émissivité (130) est positionné sur l'élément électro-optique (18).

8. L'ensemble fenêtre (10) d'après la revendication 7, sachant que le revêtement à faible émissivité (130) présente une émissivité inférieure à environ 0,1.

9. L'ensemble fenêtre d'après la revendication 1, comprenant en outre :
une deuxième vitre (164) placée entre la première vitre (160) et la première surface (26) de l'élément électro-optique (18).

10. L'ensemble fenêtre d'après la revendication 9, sachant que le premier espace inter-panneaux (160a) est situé entre la première vitre (160) et la deuxième vitre (164), et qu'un deuxième espace inter-panneaux (160b) est formé entre la deuxième vitre (164) et la première surface (26) de l'élément électro-optique (18).

11. L'ensemble fenêtre d'après l'une quelconque des revendications 9-10, sachant que le film réfléchissant dans l'infrarouge (66) est positionné sur au moins l'un des éléments suivants : la première vitre (160), la deuxième vitre (164) et l'élément électro-optique (18).

12. L'ensemble fenêtre d'après l'une quelconque des revendications 1-11, sachant que le film réfléchissant dans l'infrarouge (66) comprend un empilement de matériaux alternés.

13. L'ensemble fenêtre d'après la revendication 12,
sachant que l'empilement de matériaux alternés inclut au moins une couche diélectrique, et
sachant que l'empilement de matériaux alternés inclut de préférence au moins deux couches diélectriques différentes.
